# EUROPEAN PATENT APPLICATION

(11) **EP 4 769 042 A1**
(43) Date of publication of application: **01.07.2026**
(21) Application number: 24882646.3
(22) Date of filing: 12.09.2024
(51) Int. Cl.: G05B 19/418, G05D 16/00, H01M 4/04

(54) **PROCESS MANAGEMENT DEVICE AND OPERATION METHOD THEREOF**

(30) Priority: 25.10.2023 KR 20230143989
(71) Applicant: LG Energy Solution, Ltd., Seoul 07335 (KR)
(72) Inventor: CHONG, Eue Cheol, Daejeon 34122 (KR); YANG, Hee Kwang, Daejeon 34122 (KR); KIM, Yeon Chan, Daejeon 34122 (KR); KO, Myung Jun, Daejeon 34122 (KR)
(74) Representative: BCKIP Part mbB
(86) International application number: PCT/KR2024/013925
(87) International publication number: WO 2025/089617

(57) **Abstract**

According to an embodiment disclosed in this document, a process management apparatus may include a sensor including an air supply unit and an exhaust unit, each operating at a rotational speed to form an airflow to slurry, and a damper to control the airflow, the sensor configured to measure the differential pressure of at least some of a plurality of drying zones for drying the slurry, and a controller configured to adjust at least one of the rotational speed of the air supply unit, the rotational speed of the exhaust unit, and the opening rate of the damper based on the measured differential pressures.

## Description

### TECHNICAL FIELD

### CROSS REFERENCE TO RELATED APPLICATION

This application claims priority to Korean Patent Application No. 10-2023-0143989, filed October 25, 2023, the entire contents of which is incorporated herein for all purposes by this reference.

### TECHNICAL FIELD

The embodiments disclosed in this document relate to a process management apparatus and operating method thereof.

### BACKGROUND ART

Recently, research and development on secondary batteries has been actively conducted. Here, secondary batteries refer to rechargeable batteries, encompassing traditional Ni/Cd batteries, Ni/MH batteries, and modern lithium-ion batteries. Among secondary batteries, lithium-ion batteries offer higher energy density compared to traditional Ni/Cd and Ni/MH batteries, and their smaller, lighter design makes them highly useful as power sources for portable devices. Recently, their use has expanded to power electric vehicles, gaining attention as a next-generation energy storage medium.

The manufacturing process of secondary batteries may include a cathode manufacturing process, and a key quality factor of the secondary battery cathode can include adhesion. The secondary battery cathode can be formed by applying a slurry containing active material, conductive agent, and binder onto an electrode sheet and then drying it, with the adhesion of the cathode determined by the quality of the slurry drying process. For example, excessive or insufficient drying of the electrode slurry can compromise cathode adhesion.

### DISCLOSURE

### TECHNICAL PROBLEM

It is an object of the embodiments disclosed in this document to provide a process management apparatus and operating method thereof capable of enhancing the adhesion of an electrode by controlling the differential pressure of a drying zone in a consistent and uniform manner.

The technical objects of the embodiments disclosed in this document are not limited to the aforesaid, and other objects not described herein with be clearly understood by those skilled in the art from the descriptions below.

### TECHNICAL SOLUTION

According to an embodiment disclosed in this document, a process management apparatus may include a sensor including an air supply unit and an exhaust unit, each operating at a rotational speed to form an airflow to slurry, and a damper to control the airflow, the sensor configured to measure the differential pressure of at least some of a plurality of drying zones for drying the slurry, and a controller configured to adjust at least one of the rotational speed of the air supply unit, the rotational speed of the exhaust unit, and the opening rate of the damper based on the measured differential pressures.

According to an embodiment disclosed in this document, a method of operating a process management apparatus may include measuring the differential pressure of at least some of a plurality of drying zones that include an air supply unit and an exhaust unit, each operating at a rotational speed to form an airflow to slurry, and a damper to control the airflow, and adjusting at least one of the rotational speed of the air supply unit, the rotational speed of the exhaust unit, and the opening rate of the damper based on the measured differential pressures.

### ADVANTAGEOUS EFFECTS

The process management apparatus and operating method thereof according to the embodiments disclosed in this document is advantageous in terms of enhancing the adhesion of the electrodes produced by controlling the differential pressure of the drying zones during the process.

In addition, various effects identified directly or indirectly through this document can be provided.

### DESCRIPTION OF DRAWINGS

FIG. 1 is a diagram illustrating the coating process of a battery electrode according to an embodiment disclosed in this document;
FIG. 2 is a diagram illustrating the configuration of a drying zone according to an embodiment disclosed in this document;
FIG. 3 is a diagram illustrating the configuration of a process management apparatus according to an embodiment disclosed in this document;
FIG. 4 is a diagram illustrating the adhesion based on the differential pressure in a drying zone according to an embodiment disclosed in this document;
FIG. 5 is a diagram illustrating the adhesion based on the differential pressure difference in a drying zone according to an embodiment disclosed in this document;
FIG. 6 is a flowchart illustrating the operating method of a process management apparatus according to an embodiment disclosed in this document;
FIG. 7 is a flowchart illustrating the adjustment process of a process management apparatus according to an embodiment disclosed in this document; and
FIG. 8 is a flowchart illustrating the adjustment process of a process management apparatus according to an embodiment disclosed in this document.

### MODE FOR INVENTION

Hereinafter, various embodiments of the present invention will be described with reference to the accompanying drawings. However, the description is not intended to limit the present invention to particular embodiments, and it should be construed as including various modifications, equivalents, and/or alternatives of the embodiments described herein.

In this document, the singular noun corresponding to an item may encompass one or more instances of that item, unless explicitly indicated otherwise in context. In this document, phrases such as "A or B", "at least one of A and B", "at least one of A or B", "A, B or C", "at least one of A, B, and C", and "at least one of A, B, or C" may each refer to any of the listed items individually or any combination of those items. Terms such as "the first", "the second", "first", "second" are used simply to distinguish one component from another and do not limit these components in other aspects (e.g., importance or order). In this document, when it is mentioned that a component (e.g., the first component) is "coupled" or "connected" to another component (e.g., the second component) with or without terms like "functionally" or "communicatively," it implies that the first component may be connected to the second component directly (e.g., via wired connection), wirelessly, or through a third component.

Each component described in this document (e.g., modules or programs) may include one or more instances. According to various embodiments, one or more components or operations described herein may be omitted, or one or more other components or operations may be added. Alternatively or additionally, a plurality of components (e.g., modules or programs) may be integrated into a single component. In this case, the integrated component may perform one or more functions of each of the plurality of components identically or similarly to those performed by the corresponding component of the plurality of components prior to the integration. According to various embodiments, operations performed by modules, programs, or other components are executed sequentially, in parallel, iteratively, or heuristically, or one or more of the operations are executed in a different order, omitted, or one or more other operations may be added.

The term "module" or "unit" used in this document may encompass units implemented in hardware, software, or firmware, and may be used interchangeably with terms such as logic, logic block, component, or circuit. A module may be a component assembled as a whole or one or more units performing one or more functions, which may constitute the minimum unit of the component or a part thereof. For example, according to one embodiment, a module may be implemented in the form of an application-specific integrated circuit (ASIC).

Various embodiments of this document may be implemented as software (e.g., a program or application) including one or more instructions stored on a machine-readable storage medium (e.g., memory). For example, the processor of a device may invoke and execute at least one instruction stored on a storage medium. This enables the device to operate to perform at least one function in accordance with the at least one invoked instruction. The one or more instructions may include code generated by a compiler or code executable by an interpreter. The machine-readable storage medium may be provided in the form of a non-transitory storage medium. Here, 'non-transitory' mealy means that the storage medium is a tangible device and does not include signals (e.g., electromagnetic waves), and this term is used regardless of whether the data is stored permanently or temporarily.

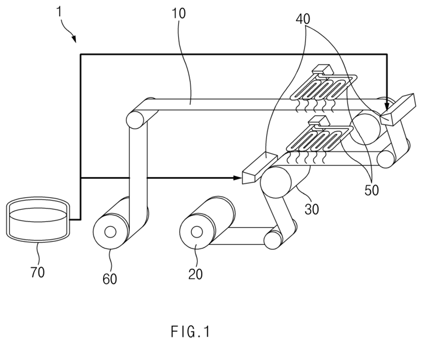

FIG. 1 is a diagram illustrating the coating process of a battery electrode according to an embodiment disclosed in this document.

With reference to FIG. 1, the battery electrode may be produced through a coating process on the electrode collector 10 of the coating device 1. The coating device 1 may include an unwinder 20, a drive roller 30, a coating die 40, a dryer 50, a winder 60, and a supply tank 70.

The manufacturing process of a battery electrode includes forming an electrode active material layer on the electrode collector 10, and the coating device 1 may be used to form the active material layer on the electrode collector 10. The process of forming the electrode active material layer includes applying the electrode active material in a slurry state to the electrode collector 10, and then drying the slurry-applied electrode active material on the electrode collector 10 to remove the solvent present in the slurry, thereby forming the electrode active material layer on the electrode collector 10.

More specifically, the electrode collector 10 in roll form may travel along a path, during which the slurry is applied, and then the applied slurry is dried to form the active material layer (i.e., complete the coating), after which the electrode collector 10 may be rolled up again in roll form.

First, the unwinder 20 may unwind the electrode collector 10 in roll form. The electrode collector 10 unwound from the unwinder 20 may be conveyed along the travel path by the drive roller 30. That is, the drive roller 30 may move the electrode collector 10 unwound from the unwinder 20 along the travel path. The drive roller 30 may move the thin roll-form electrode collector 10 continuously in a predetermined process direction.

While it is preferable for the drive roller 30 to have a cylindrical shape for efficiently driving the electrode collector 10, this is not a strict limitation. A plurality of drive rollers 30 may be arranged to move the electrode collector 10.

The coating die 40 may apply slurry to at least one surface of the electrode collector 10. For example, the coating die 40 may be positioned to face one side of the electrode collector 10, which is being moved by the drive roller 30, and apply the electrode active material in slurry form to the electrode collector 10. The coating die 40 may include a coating pattern shim to allow the slurry-state electrode active material to be ejected according to a coating pattern. The slurry-state electrode active material may be ejected from the coating pattern shim onto the electrode collector 10, thereby performing a coating process. To facilitate coating, coating areas may be pre-marked on the electrode collector 10 at predetermined intervals.

The coating die 40 may be installed to face the coating surface of the electrode collector 10, while the electrode collector 10 moves continuously along the process direction driven by the drive roller 30. As the electrode collector 10 moves, the electrode active material discharged from the coating die 40 may be coated onto the surface of the electrode collector 10.

A plurality of coating dies may be provided. For example, a plurality of coating dies 40 may may be installed facing each side of the electrode collector 10 to coat both sides of the electrode collector 10. As an example, a top coating die for coating the upper surface of the electrode collector 10 and a back coating die for coating the bottom surface may be included. The top coating die and the back coating die may be installed in a certain area of the traveling path of the electrode collector 10, and as shown in FIG. 1, allowing to sequentially perform top coating and back coating in different installed areas.

The dryer 50 may dry the slurry-state electrode active material applied to the electrode collector 10 to remove the solvent present in the slurry-state electrode active material, thereby forming an electrode active material layer on the electrode collector 10. A plurality of dryers 50 may be provided, and when multiple coatings are performed as described above with the plurality of coating dies 40, drying by the dryer 50 may be performed sequentially after each coating.

The dryer 50 may be composed of a plurality of drying zones. The plurality of drying zones may be sequentially positioned along the traveling path of the electrode collector 10, allowing the electrode collector 10 coated with the slurry to pass through the drying zones sequentially, such that the solvent in the slurry-state electrode active material may be vaporized and removed.

The winder 60 may rewind the electrode collector 10 once coating is complete.

The supply tank 70 may store the slurry. The slurry stored in the supply tank 70 may be supplied to the coating die 40 via the coating device 200. The slurry stored in the supply tank 70 is supplied to the coating die 40 by the coating device 200, and is discharged by the coating die 40 to be applied to the electrode collector 10.

In this way, an electrode active material layer can be formed on the electrode collector 10 through a series of processes by the coating device 1.

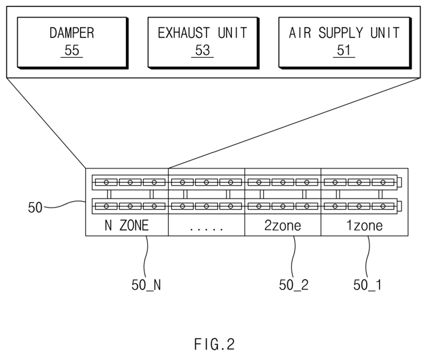

FIG. 2 is a diagram illustrating the configuration of a drying zone according to an embodiment disclosed in this document.

With reference to FIG. 2, the dryer 50 may include a plurality of drying zones 50_1 to 50_N (N is a natural number greater than or equal to 2).

The plurality of drying zones 50_1 to 50_N may be configured to dry the electrode collector 10. According to the embodiments, the plurality of drying zones 50_1 to 50_N may include drying means for drying the electrode collector 10 being conveyed along the conveying path.

According to an embodiment, each of the plurality of drying zones 50_1 to 50_N may include an air supply unit 51 for supplying outside air, an exhaust unit 53 for discharging inside air, and a damper 55 for controlling the airflow into and out of the drying zone. The number of drying zones 50_1 to 50_N is not limited, but as an example, the plurality of drying zones may include ten sequentially connected drying zones.

The air supply unit 51 is configured to supply outside air to each drying zone. The air supply unit 51 may operate at a rotational speed to generate airflow. For example, the air supply unit 51 may include a duct and a supply fan connected to each drying zone, and the rotation of the supply fan may supply outside air through the duct. In another example, the duct of each air supply unit 51 may be merged into a single main duct, and the rotation of a main fan positioned in the main duct may supply outside air to the air supply unit 51 of each drying zone.

The exhaust unit 53 is configured to allow inside air from each drying zone to be discharged to the outside. The exhaust unit 53 may operate at a rotational speed to generate the airflow within each drying zone. For example, the exhaust unit 53 may include a duct and an exhaust fan connected to each drying zone, and the rotation of the exhaust fan may discharge inside air through the duct. In another example, the duct of each exhaust unit 53 may be merged into a single main duct, and the rotation of a main fan located in the main duct may allow the inside air from each drying zone to be discharged through the exhaust unit 53.

The damper 55 may regulate the airflow through the air supply unit 51 and/or the exhaust unit 53 of each drying zone. The damper 55 may be in the form of a valve, and the airflow in each drying zone may be adjusted by the opening degree of the valve.

The adhesive strength of the battery electrode may be determined by how adequately the drying process is performed on the electrode collector 10. For example, when the drying process is excessive, causing over-drying of the electrode collector 10, or insufficient, resulting in inadequate drying of the electrode collector 10, the adhesive strength of the battery electrode 130 may deteriorate.

In particular, the adhesive strength of the battery electrode has been found to be closely related to the differential pressure in each drying zone during the drying process. Therefore, by appropriately adjusting the differential pressure of the drying zones during the drying process of the electrode collector 10, the adhesive strength of the battery electrode can be improved. Additionally, since the airflow into and out of each drying zone induces changes in differential pressure, the differential pressure in each drying zone may be controlled by controlling the air supply unit 51, exhaust unit 53, and damper 55.

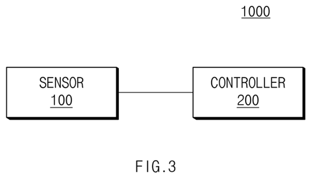

FIG. 3 is a diagram illustrating the configuration of a process management apparatus according to an embodiment disclosed in this document.

With reference to FIG. 3, the process management apparatus 1000 may include a sensor 100 and a controller 200. However, this is not limiting, and some components may be omitted from the process management apparatus 1000, or other general components may be further included in the process management apparatus 1000.

According to an embodiment, the sensor 100 and controller 200 in the process management apparatus 1000 may be electrically connected to each other via an inter-device communication method. The inter-device communication method may include bus, general purpose input and output (GPIO), serial peripheral interface (SPI), and mobile industry processor interface (MIPI).

The plurality of drying zones may be configured to evaporate the solvent from the slurry-state electrode active material applied to the electrode collector 10.

In an embodiment, the plurality of drying zones may include at least one preheating drying zone, a plurality of constant-rate drying zones, and at least one falling-rate drying zone.

Here, the preheating drying zone may refer to a section where strong heat is applied to the electrode collector 10 coated with slurry in a short period of time, raising the temperature to a level sufficient for the slurry to vaporize. Since the electrode collector 10 passes through the preheating drying zone quickly and the vaporization of the slurry is not yet fully achieved, this section has little impact on adhesive strength.

The preheating drying zone may be positioned at the front of the plurality of drying zones and, for example, correspond to zones 1 and 2 when there are 10 zones.

The constant-rate drying zone is a section where steady heat is applied to vaporize the solvent from the slurry, allowing the active material layer to form (adhere) on the electrode collector 10 as the solvent in the slurry evaporates. In other words, the constant-rate drying zone is a section where the active material layer forms on the electrode collector 10 through the vaporization of the slurry, and differences in drying speed and other factors may affect the adhesive strength (adhesion). Therefore, adjusting the drying conditions in the constant-rate drying zone is directly linked to the adhesion of the battery electrode.

The constant-rate drying zone may be positioned in the middle of the plurality of drying zones, corresponding to zones 3 to 7.

The falling-rate drying zone is a section where residual solvent in the slurry is removed after adhesion has occurred through slurry vaporization. Similar to the preheating drying zone, the electrode collector 10 passes through this zone for a short duration, and since residual solvent is being removed without substantial adhesion, this zone has a minimal impact on adhesive strength.

The falling-rate drying zone may be positioned at the end of the plurality of drying zones, corresponding to zones 9 and 10.

The process management apparatus 1000 may enhance the adhesive strength of the battery electrode by maintaining the differential pressure at a constant level across the plurality of drying zones, particularly by stabilizing the solvent drying rate through maintaining a consistent differential pressure in the constant-rate drying zone.

The sensor 100 may measure the differential pressure in at least some of the plurality of drying zones. When the sensor 100 measures the differential pressure in multiple zones, there may be multiple sensors, with each sensor measuring the differential pressure in each drying zone. For example, the sensor 100 may measure the differential pressure in several constant-rate drying zones.

Here, the differential pressure in a specific zone refers to the negative pressure formed in that zone and may be expressed as a relative value compared to external pressure. For example, when the external pressure is assumed to be 100 and the internal pressure is around 70, the differential pressure would be -30. Similarly, when the internal and external pressures are the same, the differential pressure would be 0. The larger the absolute value of the differential pressure (i.e., the lower the internal pressure compared to the external pressure), the stronger the airflow (exhaust) in the drying zone may be.

The controller 200 may have a structure to execute commands that implement operations of the process management apparatus 1000. The controller 200 may be implemented as an array of various logic gates or a general-purpose microprocessor and may include a single processor or multiple processors. For example, the controller 200 may be implemented in at least one form of a microprocessor, central processing unit (CPU), graphics processing unit (GPU), or application processor (AP).

The controller 200 may operate in conjunction with memory configured to store various data, instructions, mobile applications, computer programs, and the like. The memory may be configured separately or integrally with the controller 200. The controller 200 may execute commands stored in memory to perform various operations. For example, memory may be implemented as non-volatile devices such as read-only memory (ROM), programmable read-only memory (PROM), erasable programmable read-only memory (EPROM), electrically erasable programmable read-only memory (EEPROM), flash memory, phase-change RAM (PRAM), magnetoresistive RAM (MRAM), resistive RAM (RRAM), and ferroelectric RAM (FRAM), and volatile devices such as dynamic RAM (DRAM), static RAM (SRAM), synchronous DRAM (SDRAM), phase-change RAM (PRAM), or in the form of hard disk drive (HDD), solid-state drive (SSD), secure digital (SD), and micro-SD, or a combination of these.

The controller 200 may adjust at least one of the rotational speed of the air supply unit 51, the rotational speed of the exhaust unit 53, and the opening degree of the damper 55 based on the differential pressures measured by the sensor 100. By adjusting at least one of these parameters, the controller 200 may maintain the differential pressure in each drying zone within an appropriate range, thereby enhancing the drying performance and improving the adhesive strength of the battery electrode.

According to an embodiment, the controller 200 may correct at least one of the rotational speed of the air supply unit 51 and the rotational speed of the exhaust unit 53 based on the differential pressure of the first zone and the differential pressure of the second zone measured by the sensor 100.

By correcting the rotational speed of the air supply unit 51 and/or the exhaust unit 53, the controller 200 may adjust the airflow for the first and second zones. Consequently, the airflow into and out of the first and second zones may be adjusted, and the differential pressure in each zone may be corrected.

According to an embodiment, the controller 200 may, for each of the first and second zones, correct by increasing the rotational speed of the air supply unit 51 when the differential pressure in each zone is below a lower limit. When the differential pressure in a zone is below the lower limit, indicating that the amount of air being discharged from the zone exceeds the amount of outside air being supplied to the zone, the controller 200 may increase the rotational speed of the air supply unit 51 to increase the supply of outside air to the zone and correct the differential pressure. In some cases, the controller 200 may also decrease the rotational speed of the exhaust unit 53 along with increasing the rotational speed of the air supply unit 51.

This allows the controller 200 to increase the amount of outside air supplied to each drying zone and raise the internal pressure of each zone, thereby adjusting the differential pressure to an appropriate level.

According to an embodiment, when the differential pressure in the first and second zones exceeds the upper limit, the controller 200 may adjust the rotational speed of the exhaust unit 53 to correct this. When the differential pressure exceeds the upper limit, indicating that the amount of outside air supplied to the zone exceeds the amount of air being discharged from the zone, the controller 200 may increase the rotational speed of the exhaust unit 53 to increase the discharge of air from the zone and correct the differential pressure. In some cases, the controller 200 may also decrease the rotational speed of the air supply unit 51 in conjunction with increasing the rotational speed of the exhaust unit 53.

This allows the controller 200 to decrease the internal pressure of each drying zone by increasing the amount of air discharged, thereby decreasing the internal pressure of each zone and adjusting the differential pressure to a level below a predetermined level.

By controlling the rotational speeds of the air supply unit 51 and/or the exhaust unit 53, the controller 200 may maintain the differential pressure within a predetermined range for each zone.

In an embodiment, the controller 200 may correct the rotational speeds of the air supply unit 51 and exhaust unit 53 to preset levels and perform feedback control. For example, the controller 200 may adjust the rotational speed of the air supply unit 51 and/or exhaust unit 53 in increments of 10 RPM for each correction.

The upper and lower limits may be preset experimentally and statistically. For example, the upper and lower limits may be set based on the statistical results of the differential pressures in the drying zones during the drying process of battery electrodes that correspond to the top 5% of adhesive strength among the manufactured battery electrodes. As an example, the upper limit of the differential pressure may be set to 0, and the lower limit may be set to -30.

The controller 200 may not perform any adjustments when the differential pressures of the first zone and the second zone fall within an acceptable range, specifically between the lower limit and upper limit.

According to an embodiment, the controller 200 may adjust the opening degree of the damper 55 based on the difference between the differential pressures of the first zone and the second zone. By adjusting the opening degree of the damper 55, the controller 200 may regulate the amount of outside air supplied to each zone and/or the amount of inside air discharged from each zone.

By adjusting the opening rate of the damper 55 to maintain a balanced differential pressure in each zone, the controller 200 may control the drying conditions of the electrode collector 10 consistently, thereby improving the drying quality.

According to an embodiment, when the difference between the differential pressures of the first zone and the second zone exceeds a reference value, the controller 200 may adjust the opening rate of the damper 55 downward for the zone with the larger absolute value of the differential pressure. Since the differential pressures in each drying zone are negative, the zone with the larger absolute value of the differential pressure corresponds to the zone with the smaller differential pressure value.

By lowering the opening rate of the damper 55 for the zone with the larger absolute differential pressure, the controller 200 may reduce the differential pressure level in that zone, thereby regulating the difference in differential pressures between the zones and maintaining a consistent level of differential pressure in each zone.

The reference value may be preset experimentally and statistically. For example, the reference value may be set based on the statistical results of the differences (variances) in differential pressures during the drying process of the top 5% of manufactured battery electrodes in terms of adhesive strength. As an example, the reference value may be set to 15.

According to an embodiment, the first zone may be defined as the first drying zone among the constant rate drying zones, while the second zone may be defined as the last drying zone among the constant rate drying zones. As described above, the constant rate drying zone is a section that is directly related to the adhesive strength of the battery electrode, and the controller 200 may enhance the adhesive strength of the battery electrode by maintaining the differential pressures of the zones included in the constant rate drying zones within a predetermined range and by balancing the differential pressures of each zone.

According to an embodiment, the sensor 100 may further measure the differential pressure of the third zone. In this case, the third zone may be located between the first zone and the second zone. For example, when the first zone is the first zone of the constant rate drying zones and the second zone is the last zone of the constant rate drying zones, the third zone may be an intermediate zone of the constant rate drying zones. As an example, when the constant rate drying zones correspond to the third to seventh drying zones among the plurality of drying zones, the first zone may be the third drying zone, the third zone may be the fifth drying zone, and the second zone may be the seventh drying zone.

According to an embodiment, the controller 200 may adjust the rotational speed of the air supply unit 51 and/or the exhaust unit 53 based on the differential pressures of the first to third zones.

According to an embodiment, the controller 200 may perform a first adjustment of the opening rate of the damper 55 based on the difference between the differential pressures of the first zone and the third zone, and a second adjustment based on the difference between the differential pressures of the second zone and the third zone.

In an embodiment, when the difference in the differential pressures of each zone exceeds a reference value, the controller 200 may perform the first and second adjustments by lowering the opening rate of the damper 55 for the zone with the larger absolute differential pressure.

By adjusting the opening rate of the damper 55 in this manner, the controller 200 may maintain the differences in differential pressures among the first to third zones within a predetermined range. This allows the controller 200 to maintain the differential pressures of the zones corresponding to the constant rate drying zones at a balanced level, thereby improving drying performance and enhancing the adhesive strength of the battery electrodes.

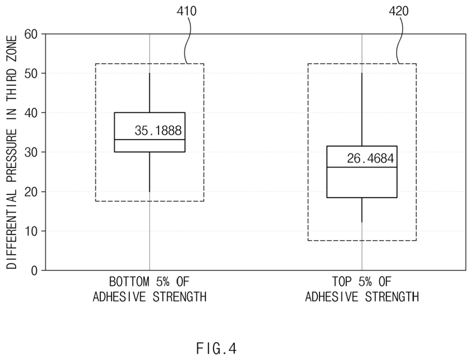

FIG. 4 is a diagram illustrating the adhesive strength based on the differential pressure in a drying zone according to an embodiment disclosed in this document.

FIG. 4 shows box plot graphs 410 and 420 representing the differential pressure of the first zone (zone 3) of the constant rate drying zone during the manufacturing process of electrodes with the bottom 5% of adhesive strength and those with the top 5% of adhesive strength, respectively. In each of the graphs 410 and 420, the y-axis represents the absolute value of the differential pressure.

Comparing the box plot graphs 410 and 420 reveals that electrodes manufactured under conditions where the absolute value of the differential pressure in the drying zone exceeds a specific value (e.g., 30) exhibit lower adhesion. This can be confirmed through the average values and the box range shown in the box plot graphs (the range corresponding to 25% to 75% of the entire data) shown in the box plot graphs 410 and 420.

Therefore, referring to FIG. 4 allows for the examination of the relationship between the differential pressure in the drying zone and adhesive strength, confirming the necessity of adjusting the differential pressure to improve adhesive strength.

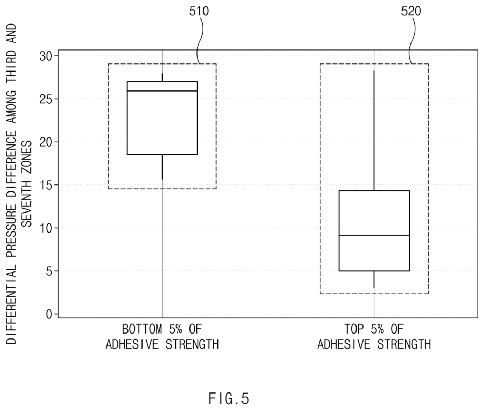

FIG. 5 is a diagram illustrating the adhesion based on the differential pressure difference in a drying zone according to an embodiment disclosed in this document.

FIG. 5 shows box plot graphs 510 and 520 representing the differential pressure differences for electrodes manufactured with adhesive strengths in the bottom 5% and top 5%, respectively.

Comparing the box plot graphs reveals that electrodes with a differential pressure difference exceeding 15 exhibit lower adhesive strength, while most of the high-adhesion electrodes were dried under conditions where the differential pressure difference was below 15.

Therefore, referring to FIG. 5 allows for the examination of the relationship between the differential pressure differences in the drying zones and adhesive strength, confirming the necessity of adjusting these differential pressure differences to improve adhesive strength.

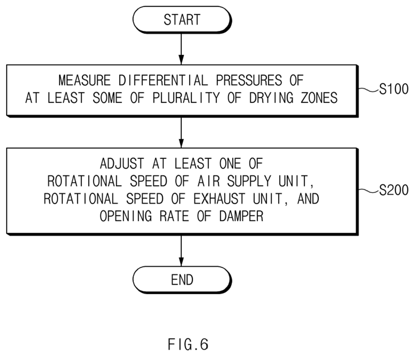

FIG. 6 is a flowchart illustrating the operating method of a process management apparatus according to an embodiment disclosed in this document.

With reference to FIG. 6, the operation method of the process management apparatus may include measuring the differential pressure in at least some of the multiple drying zones in operation S100, and adjusting at least one of the rotational speed of the air supply unit, the rotational speed of the exhaust unit, and the opening rate of the damper based on the measured differential pressures in operation S200.

In operation S100, the sensor 100 may measure the differential pressure in at least some of the plurality of drying zones. In an embodiment, the sensor 100 may measure the differential pressure of the first drying zone (Zone 1) among the constant-rate drying zones and the differential pressure of the last drying zone (Zone 2) among the constant-rate drying zones. In another embodiment, the sensor 100 may additionally measure the differential pressure of the intermediate drying zone (Zone 3) among the constant-rate drying zones.

In operation S200, the controller 200 may adjust at least one of the rotational speed of the air supply unit, the rotational speed of the exhaust unit, and the opening rate of the damper to regulate the differential pressures in the drying zones based on the measured differential pressures. In an embodiment, the controller 200 may correct the rotational speed of the air supply unit 51 and/or the rotational speed of the exhaust unit 53 based on the differential pressures of each zone. Additionally, the controller 200 may adjust the opening rate of the damper 55 based on the differences in the differential pressures of each zone.

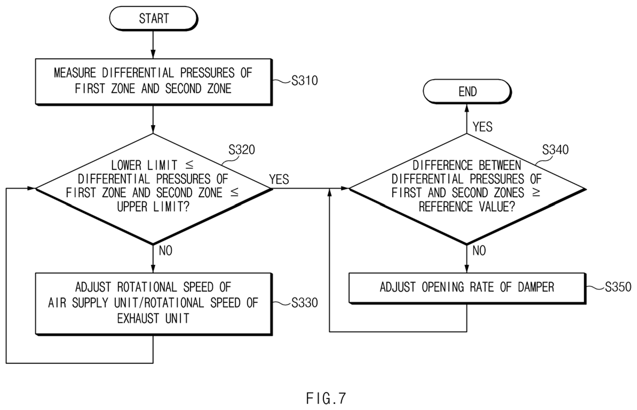

FIG. 7 is a flowchart illustrating the adjustment process of a process management apparatus according to an embodiment disclosed in this document.

With reference to FIG. 7, the process management apparatus 1000 may adjust the drying conditions in the drying zones to enhance the adhesive strength of the battery electrode.

In operation S310, the sensor 100 measures the differential pressures in the first zone and the second zone. In an embodiment, the first zone may be defined as the first drying zone among the constant-rate drying zones, and the second zone may be defined as the last drying zone among the constant-rate drying zones.

In operation S320, the controller 200 may determine whether the differential pressures of the first zone and the second zone are within a predetermined range. The predetermined range may be equal to or greater than a preset lower limit and equal to or less than a preset upper limit. When the differential pressures of the first and second zones are within the predetermined range (Yes in operation S320), the controller 200 may proceed to operation S340. When at least one of the differential pressures of the first and second zones is outside the predetermined range (No in operation S320), the controller 200 may proceed to step S330.

In operation S330, the controller 200 may adjust the rotational speed of the air supply unit 51 and/or the rotational speed of the exhaust unit 53. In an embodiment, when the differential pressure is below the lower limit in a zone, the controller 200 may increase the rotational speed of the air supply unit 51. When the differential pressure exceeds the upper limit in a zone, the controller 200 may increase the rotational speed of the exhaust unit 53.

In operation S340, the controller 200 may determine whether the difference between the differential pressures of the first and second zones is equal to or less than the reference value.

In operation S350, the controller 200 may adjust the opening rate of the damper 55. In an embodiment, the controller 200 may lower the opening rate of the damper 55 for the zone with the larger absolute value of the differential pressure between the first and second zones.

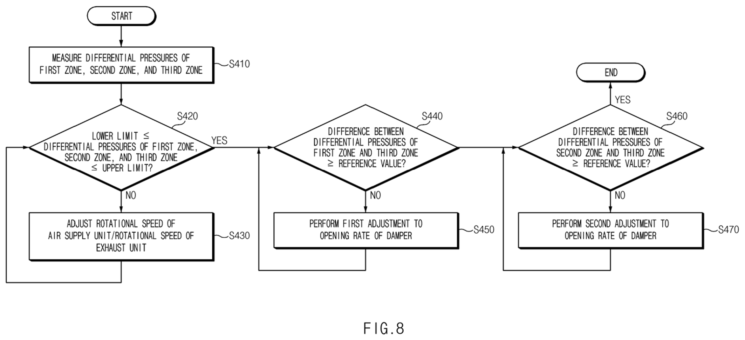

FIG. 8 is a flowchart illustrating the adjustment process of a process management apparatus according to an embodiment disclosed in this document.

With reference to FIG. 8, the sensor 100 may additionally measure the differential pressure of the third zone compared to FIG. 7.

In operation S410, the sensor 100 measures the differential pressures in the first zone, the second zone, and the third zone.

In operation S420, the controller 200 may determine whether the differential pressures of the first to third zones are within a predetermined range. The predetermined range may be equal to or greater than a preset lower limit and equal to or less than a preset upper limit When the differential pressures of the first to third zones are within the predetermined range (Yes in operation S420), the controller 200 may proceed to operation S440. When at least one of the differential pressures of the first to third zones is outside the predetermined range (No in operation S420), the controller 200 may proceed to step S430.

In operation S430, the controller 200 may adjust the rotational speed of the air supply unit 51 and/or the rotational speed of the exhaust unit 53. In an embodiment, when the differential pressure is below the lower limit in a zone, the controller 200 may increase the rotational speed of the air supply unit 51. When the differential pressure exceeds the upper limit in a zone, the controller 200 may increase the rotational speed of the exhaust unit 53.

In operation S440, the controller 200 may determine whether the difference between the differential pressures of the first zone and the third zone is equal to or less than the reference value.

In operation S450, the controller 200 may perform a first adjustment to the opening rate of the damper 55. In an embodiment, the controller 200 may lower the opening rate of the damper 55 for the zone with the larger absolute value of the differential pressure among the first to third zones.

In operation S460, the controller 200 may determine whether the difference between the differential pressures of the second zone and the third zone is equal to or less than the reference value.

In operation S470, the controller 200 may perform a second adjustment to the opening rate of the damper 55. In an embodiment, the controller 200 may lower the opening rate of the damper 55 for the zone with the larger absolute value of the differential pressure between the second zone and the third zone.

By performing the first and second adjustments to the opening rate of the damper 55, the controller 200 may maintain a balanced differential pressure across the drying zones (e.g., the first zone to third zones).

Although all components are described as being combined or operating as one, the embodiments disclosed in this document are not limited to these examples. That is, within the scope of the embodiments disclosed in this document, all of the components may also be selectively combined in one or more ways to function.

Furthermore, terms such as "comprise," "include," or "have" as used above should be interpreted to imply the inclusion of the specified components unless specifically stated otherwise, rather than excluding other components, and may include additional components. Unless otherwise defined, all terms, including technical or scientific terms used herein, have the same meanings as commonly understood by those skilled in the art to which the embodiments disclosed in this invention belong. It will be further understood that terms, such as those defined in commonly used dictionaries, should be interpreted as having a meaning that is consistent with their meaning in the context of the relevant art and should not be interpreted in an idealized or overly formal sense unless expressly so defined herein.

The above description is only an illustrative example of the technical idea disclosed in this document, and those skilled in the art to which the embodiments disclosed in this document belong will be able to make various modification and changes without departing from the subject matter of the embodiments disclosed in this document. Therefore, the embodiments disclosed in this document are not intended to limit the technical concept disclosed in this document but are for the purpose of illustration, and the scope of the technical concept disclosed in this document is not limited by these embodiments. The scope of protection for the technical concepts disclosed in this document should be interpreted in accordance with the claims set forth below, and all equivalent technical concepts should be considered as included in the scope of protection of this document.

## Claims

1. A process management apparatus comprising:
a sensor comprising an air supply unit and an exhaust unit, each operating at a rotational speed to form an airflow to slurry, and a damper to control the airflow, the sensor configured to measure the differential pressure of at least some of a plurality of drying zones for drying the slurry; and
a controller configured to adjust at least one of the rotational speed of the air supply unit, the rotational speed of the exhaust unit, and the opening rate of the damper based on the measured differential pressures.

2. The process management apparatus of claim 1, wherein the sensor measures the differential pressures of a first zone and a second zone among the plurality of drying zones, and the controller adjusts at least one of the rotational speed of the air supply unit and the rotational speed of the exhaust unit based on the differential pressures of the first zone and the second zone.

3. The process management apparatus of claim 2, wherein the controller adjusts the rotational speed of the air supply unit to increase based on the differential pressure of each of the first and second zones being below a lower limit, and adjusts the rotational speed of the exhaust unit to increase based on the differential pressures exceeding an upper limit.

4. The process management apparatus of claim 2, wherein the controller adjusts the opening rate of the dampers provided respectively in the first and second zones based on the difference between the differential pressures of the first and second zones.

5. The process management apparatus of claim 4, wherein the controller, based on the difference between the differential pressures of the first and second zones being equal to or greater than a reference value, lowers the opening rate of the damper provided in the zone with the larger absolute value of the differential pressure between the first zone and the second zone.

6. The process management apparatus of claim 2, wherein the plurality of drying zones comprises at least one preheating drying zone, a plurality of constant-rate drying zones, and at least one falling-rate drying zone, the first zone being defined as the first drying zone among the constant-rate drying zones, the second zone being defined as the last drying zone among the constant-rate drying zones.

7. The process management apparatus of claim 2, wherein the sensor further measures the differential pressure of a third zone located between the first zone and the second zone, and the controller performs a first adjustment to the opening rate of the dampers provided in the first zone and the third zone based on the difference between the differential pressures of the first zone and the third zone, and performs a second adjustment to the opening rate of the dampers provided in the second zone and the third zone based on the difference between the differential pressures of the second zone and the third zone.

8. The process management apparatus of claim 7, wherein the controller, based on the difference between the differential pressures of the first zone, the second zone, and the third zone being equal to or greater than a reference value, performs the first adjustment and the second adjustment to lower the opening rate of the damper for the zone with the larger absolute value of the differential pressure.

9. A method of operating a process management apparatus, the method comprising:
measuring the differential pressure of at least some of a plurality of drying zones that include an air supply unit and an exhaust unit, each operating at a rotational speed to form an airflow to slurry, and a damper to control the airflow; and
adjusting at least one of the rotational speed of the air supply unit, the rotational speed of the exhaust unit, and the opening rate of the damper based on the measured differential pressures.

10. The method of claim 9, wherein the measuring of the differential pressure comprises measuring the differential pressures of a first zone and a second zone among the plurality of drying zones, and the adjusting comprises adjusting at least one of the rotational speed of the air supply unit and the rotational speed of the exhaust unit based on the differential pressures of the first zone and the second zone.

11. The method of claim 10, wherein the adjusting comprises:
adjusting the rotational speed of the air supply unit based on the differential pressures of each of the first and second zones being below a lower limit; and
adjusting the rotational speed of the exhaust unit to increase based on the differential pressures of each of the first and second zones exceeding an upper limit.

12. The method of claim 10, wherein the adjusting comprises adjusting the opening rate of the dampers provided respectively in the first and second zones based on the difference between the differential pressures of the first and second zones.

13. The method of claim 12, wherein the adjusting comprises lowering the opening rate of the damper provided in the zone with the larger absolute value of the differential pressure between the first zone and the second zone based on the difference between the differential pressures of the first and second zones being equal to or greater than a reference value.

14. The method of claim 10, wherein the measuring comprises additionally measuring the differential pressure of a third zone located between the first and second zones, and the adjusting comprises performing a first adjustment to the opening rate of the dampers provided in the first zone and the third zone based on the difference between the differential pressures of the first zone and the third zone, and performing a second adjustment to the opening rate of the dampers provided in the second zone and the third zone based on the difference between the differential pressures of the second zone and the third zone.

15. The method of claim 14, wherein the adjusting comprises performing the first and second adjustments to lower the opening rate of the damper for the zone with the larger absolute value of the differential pressure based on the difference between the differential pressures of the first, second, and third zones being equal to or greater than a reference value.
